# EUROPEAN PATENT APPLICATION

(11) **EP 4 420 584 A1**
(43) Date of publication of application: **28.08.2024**
(21) Application number: 22882859.6
(22) Date of filing: 18.10.2022
(51) Int. Cl.: A47L 9/04, A47L 9/00, A47L 11/24

(54) **BLADE DRIVING STRUCTURE, HAIR CUTTING ROLLING BRUSH, AND CLEANING DEVICE**

(30) Priority: 18.10.2021 CN 202122508036 U
(71) Applicant: Ningbo Fujia Industrial Co., Ltd., Ningbo, Zhejiang 315400 (CN)
(72) Inventor: FANG, Jianqiang, Ningbo, Zhejiang 315400 (CN); ZHENG, Jianming, Ningbo, Zhejiang 315400 (CN)
(74) Representative: Zaboliene, Reda
(86) International application number: PCT/CN2022/125956
(87) International publication number: WO 2023/066254

(57) **Abstract**

The present disclosure discloses a blade driving structure, including a planetary gear transmission mechanism, a fixing portion is provided on a second side, a sun gear of the planetary gear transmission mechanism is fixedly connected to the fixing portion, a gear ring of the planetary gear transmission mechanism is connected to a rotating cylinder, and a planet carrier acts as a transmission output and drives a second driving shaft to rotate through a coupling; a reciprocating motion structure includes a rotating body, the second driving shaft is in circumferential transmission connection with the rotating body, and a track of the rotating body engages with a driving member to convert a rotation of the rotating body driven by the second driving shaft into a reciprocation of the driving member. The solution of the present disclosure uses the planetary gear transmission to drive the reciprocating motion structure to reciprocate by means of rotation. In addition, a fixed end cap is not required to be arranged on one end of a brush roller (i.e., the rotating cylinder), and no output gear rings and idler gear pairs are required. The present disclosure further discloses a hair cutting rolling brush using the blade driving structure and a cleaning device equipped with the hair cutting rolling brush.

## Description

### TECHNICAL FIELD

The present disclosure relates to the technical field of cleaning rolling brushes, and more particularly, relates to a blade driving structure, a hair cutting rolling brush, and a cleaning device.

### DESCRIPTION OF THE PRIOR ART

The Applicant previously designed a hair cutting rolling brush having a blade arranged in a rotating cylinder of the rolling brush. When the rotating cylinder rotates, a driving structure simultaneously drives the blade to reciprocate and cut hair, efficiently cutting hair and other debris. For details, please refer to the Chinese invention patent with authorized announcement No. CN105982615B and/or related patent families. The disclosure text of the Chinese invention patent with authorized announcement No. CN105982615B and/or the disclosure text of the U.S. family application with publication No. US20170311767A1 are incorporated into the present disclosure.

As can be seen from the above, when the rotating cylinder rotates, the blade is driven to reciprocate and cut hair by the driving structure. Therefore, the Applicant has provided some examples of driving structures in the Chinese invention patent with authorized announcement No. CN105982615B. For example, a centrifugal member is provided in an internal cavity; the centrifugal member pushes a blade 5 to move laterally by a centrifugal force. For another example, a gear driving structure is provided, including a pushing tooth 18, a gear plate 16, and a centrifugal pendulum 15; the driving structure drives the centrifugal pendulum 15 to move by rotating the rotating cylinder, thus driving the blade 5 to move laterally through the transmission of the pushing tooth 18 and the gear plate 16. For another example, an electric driving component is provided; the electric driving component uses electricity to drive the blade 5 to move in an axial direction of the rotating cylinder and/or restore the blade 5 to its original position. Although various driving structures have been provided, there are still many implementation solutions for pushing the blade to cut the winding object, which cannot be exhaustive.

On the basis of the Applicant, other driving structures have been enumerated later, such as a cam structure (see paragraphs [0053] to [0059] of the specification of the Chinese invention patent with authorized announcement No. CN110809422B for example), a magnetic actuator structure (see paragraph [0062] of the specification of the Chinese invention patent with authorized announcement No. CN110809422B for example), a dual belt driving structure (see paragraphs [0073] to [0076] of the specification of the Chinese invention patent with authorized announcement No. CN110809422B for example), a gear driving and cam output transmission structure formed by a driving gear ring, a first spur gear, a second spur gear, and an output gear ring (see paragraphs [0067] to [0072] of the specification of the Chinese invention patent with authorized announcement No. CN110809422B for example), and further details can be found in the Chinese invention patent with authorized announcement No. CN110809422B. The disclosure text of the Chinese invention patent with authorized announcement No. CN110809422B and/or the disclosure text of U.S. patent application with publication No. US20210235946A1 are incorporated into the present disclosure.

As mentioned above, other driving structures are exemplified in the Chinese invention patent with authorized announcement No. CN110809422B after the Applicant, among which the gear driving and cam output transmission structure (excerpted from the patent disclosure text of the Chinese invention patent with authorized announcement No. CN110809422B) includes a fixed end cap, a driving gear ring coupled to an elongated body of a brush roller such that the driving gear ring and the elongated body of the brush roller rotate at the same speed, a first spur gear having teeth meshing with those of the driving gear ring, a second spur gear coupled to the first spur gear such that the first and second spur gears can rotate at the same speed, and an output gear ring having teeth meshing with those of the second spur gear. The output gear ring rotates to drive the cutting blade to circulate within an opening. Also see paragraph [0067], which states that the brush roller 18 may include one or more fixed end caps 172 (best shown in FIG. 15), at least one driving gear ring 174, at least one first spur gear 176, at least one second spur gear 178, and at least one output gear ring 180. One or more of the fixed end caps 172 may be fixed and may not rotate with the elongated body 40 of the brush roller 18. The fixed end caps 172 may be configured to maintain rotational axes of the first and second spur gears 176, 178. Therefore, it is crucial for the brush roller 18 to be configured with the fixed end caps 172 to maintain the rotational axes of the first and second spur gears 176, 178. Otherwise, the first and second spur gears 176, 178 may not be able to be rotatably supported. Paragraph [0068] illustrates the transmission structure and process in detail. The first spur gear 176 is rotated by the brush roller 18. The brush roller 18 rotates to drive the driving gear ring 174 to rotate. The teeth of the driving gear ring 174 mesh with those of the first spur gear 176. In the exemplified embodiment, the second spur gear 178 is part of the first spur gear 176 and/or is securely (e.g., ridgedly) coupled to the first spur gear 176. However, this is not a limitation of the present disclosure unless specifically stated otherwise. In this way, the driving gear ring 174 rotates to drive the first spur gear 176 and the second spur gear 178 to rotate. The output gear ring 180 may be coaxial with the elongated body 40 of the brush roller 18. Due to the relative number of teeth of the driving gear ring 174, the first spur gear 176, the second spur gear 178, and the output gear ring 180, the rotation of the output gear ring 180 may be reduced (or optionally increased) relative to the elongated body 40 of the brush roller 18.

Paragraphs [0069], [0070], and [0072] more specifically describe the gear driving and cam output transmission structure. In order to more intuitively understand the transmission gear structure, paragraph [0069] is excerpted as follows. In the exemplified embodiment, a cutting blade 50 may include one or more cam followers 185 configured to engage (e.g., directly contact) with a cam surface 184. In one embodiment, the brush roller 18 may include two end caps, each of which has the cam surface 184. One of the end caps may include a gear reducer (e.g., gear reducer 170), while the other end cap may only include one cam surface 184. The elongated body 40 rotates to drive one or more of the cam surfaces 184 to rotate, thereby driving the cam followers 185 to move linearly back and forth relative to the rotational axis of the brush roller 18, allowing the cutting blade 50 to circulate. Paragraph [0070] is excerpted as follows. Alternatively (or in addition), only the first end cap 172 of the brush roller 18 may include a gear reducer (e.g., gear reducer 170) and a cam surface 184. In such embodiments, the second end cap may only allow the brush roller 18 to rotate about a pivot axis. The brush roller 18 may include one or more return springs 189. In practice, the brush roller 18 rotates to drive the gear reducer 170 and the cam surface 184 to rotate. The cam surface 184 pushes the cam followers 185 and thus the cam followers 185 drives the cutting blade 50 to move away from the first end cap 172. Then, the return springs 189 can push the cutting blade 50 to move back toward the first end cap 172. The return springs 189 can be integrally formed with the cutting blade 50 (or alternatively completely separate from the cutting blade 50). Paragraph [0072] is excerpted as follows. Through non-limiting examples, the gear reducer 170 may include an internal spur gear ring 174 (driving gear ring 174) with 40 teeth, while the fixed end cap 172 may include a spur gear 176 with 30 teeth coupled to a spur gear 178 with 28 teeth. The cam surface 184 that pushes the blade 50 may have an internal spur gear ring 180 with 39 teeth, therefore, the cam surface 184 rotates at a speed approximately 0.99 times that of the elongated body 40 of the brush roller 18, which is approximately 25 times of relative rotations per minute. As mentioned above, in the embodiment, the brush roller 18 may operate through frictional contact rather than the transmission teeth of the gear. It may be desirable to increase a size of the gear such that the internal spur gear ring 174 and the output gear ring 180 are coaxial, and one or more idler gear pairs 176, 178 are coaxial along one or more independent axes.

As can be seen from the above, the fixed end cap 172, the driving gear ring 174, the one or more idler gear pairs 176, 178, and the output gear ring 180 form a gear transmission structure. The gear transmission structure is combined with the cam and the return springs 189 through the output gear ring 180 to drive the cutting blade 50 to reciprocate. Therefore, the gear transmission structure only provides an one-directional axial pushing transmission, while the currently-disclosed technical solution cannot provide rotational transmission to the cutting blade actuator. That is, it is currently unknown whether the gear transmission structure can provide the rotational transmission to drive the cutting blade. In addition, in order to achieve the gear transmission structure, the brush roller 18 also needs to be provided with the fixed end cap 172, which increases the structural complexity and the usage cost of the brush roller 18. In addition, the output gear ring 180 is a key part, and by viewing FIG. 15 of the specification of the Chinese invention patent with authorized announcement number No. CN110809422B, it can be seen that the output gear ring 180 is shaped as a cylindrical tube with one end thereof being opened. An idler gear 178 is received in the interior of the cylindrical tube.. In order to provide transmission, an idler shaft 182 needs to be offset from a pivot axis of the output gear ring 180. Therefore, on the one hand, such a structure leads to a larger radial size of the output gear ring 180, which is not conducive to controlling the radial size of the brush roller 18 (i.e., the rotating cylinder), and on the other hand, the structure is more complex and is not conducive to assembly.

### SUMMARY OF THE DISCLOSURE

### TECHNICAL PROBLEM

The technical problem to be solved by the present disclosure is to overcome the defects of the prior art and provide a blade driving structure, in which a planetary gear transmission rotates to drive a reciprocating motion structure to reciprocate and thus drives the blade to move; in addition, a fixed end cap is not required to be arranged on one end of a brush roller (i.e., the rotating cylinder), and no output gear rings and no idler gear pairs are required. The present disclosure further provides a hair cutting rolling brush with the blade driving structure and a cleaning device with the hair cutting rolling brush.

### SOLUTION TO THE PROBLEM

### TECHNICAL SOLUTION

Compared with the prior art, the present disclosure provides a blade driving structure, including a rolling brush frame having a first side and a second side, wherein the blade driving structure further includes a planetary gear transmission mechanism, a fixing portion is arranged on the second side, a sun gear of the planetary gear transmission mechanism is fixedly connected to the fixing portion, a gear ring of the planetary gear transmission mechanism is connected to a rotating cylinder, and a planet carrier of the planetary gear transmission mechanism acts as a transmission output and drives a reciprocating motion structure to move;

the planet carrier includes an output shaft having a first coupling part configured to be in circumferential transmission connection with a second coupling part connected to a second driving shaft of the reciprocating motion structure;

the reciprocating motion structure includes a rotating body, a second driving shaft in circumferential transmission connection with the rotating body, a track is formed on a circumference of the rotating body, the track engages with a driving member to convert a rotation of the rotating body driven by the second driving shaft into a reciprocation of the driving member, and the driving member is connected to the blade.

In some embodiments, the fixing portion is shaped as a shaft, and the planetary gear transmission mechanism includes a plurality of the planet carriers arranged in parallel with each other, a plurality of the sun gears, and a plurality sets of the planet gears, and a number of the sun gears and a number of the planet gears respectively correspond to that of the planet carriers; the fixing portion is connected to the sun gear at a right end of the planetary gear transmission mechanism, and is output through the planet carrier at a left end of the gear transmission mechanism.

In some embodiments, after a hair cutting rolling brush is installed between the first side and the second side, the fixing portion, the gear transmission structure, and the reciprocating motion structure are sequentially arranged along an axial direction of the rotating cylinder of the hair cutting rolling brush from right to left.

In some embodiments, after the gear ring is axially sleeved with the rotating cylinder, the gear ring is in circumferential transmission connection with the rotating cylinder, a left end cap is arranged on a left end of the gear ring, and a right end cap is arranged on a right end of the gear ring; the left end cap, the gear ring, and the right end cap enclose a cavity, and the planetary gear, the planet carrier, and the sun gear are arranged in the cavity.

In some embodiments, the left end cap and the right end cap respectively include a bearing, the bearing of the right end cap is connected to the fixing portion, and the bearing of the left end cap is connected to the output shaft; an insertion part of the fixing portion is connected to the sun gear, such that the rotating cylinder is rotatable relative to the fixing portion, the other end of the rotating cylinder is rotatable relative to the second side, and meanwhile the sun gear connected to the fixing portion is fixed.

In some embodiments, the output shaft is inserted into a cavity through the left end cap, and the output shaft is connected to the planet carrier; a relatively-independent assembly is arranged, which includes the output shaft, the left end cap, the planetary gear transmission mechanism, the right end cap, and the fixing portion, and the assembly is connected to other structures of the hair cutting rolling brush.

In some embodiments, the track is formed on a circumferential surface of the rotating body and spirals along an axial direction of the rotating body.

In some embodiments, two ends of the driving member respectively include at least one ball, and the driving member engages with the track through the at least one ball.

In some embodiments, the second driving shaft is axially reciprocally sleeved in the rotating body and is in circumferential transmission connection with the rotating body, and two elastic members are respectively arranged on two ends of the rotating body to elastically support the rotating body.

In some embodiments, the elastic member is a compression spring, a left gasket and a right gasket are respectively arranged on two ends of a right part, a compression spring is arranged between the left gasket and a left side of the rotating body, and another compression spring is arranged between the right gasket and a right side of the rotating body.

In some embodiments, a compression degree of the compression spring is changed by adjusting a position of the corresponding compression spring, thereby changing a cutting power of the blade.

In some embodiments, the reciprocating motion structure is arranged in an independent compartment, a third bearing and fourth bearing are respectively arranged on a left partition and a right partition of the compartment, and the third bearing and the fourth bearing rotatably support the second driving shaft.

### ADVANTANGEOUS EFFECTS OF INVENTION

Compared with the prior art, by adopting the above technical solution, the present disclosure has the following advantages:

The technical solution of the present disclosure adopts the planetary gear transmission mechanism, and the planet carrier of the planetary gear transmission mechanism is connected to the output shaft, which is connected to the first coupling part. The first coupling part is in circumferential transmission connection with the second coupling part connected to the second driving shaft of the reciprocating motion structure. The planetary gear transmission mechanism drives the second driving shaft to rotate through the coupling and thus drives the rotating body to rotate. The rotating body is circumferentially provided with the track, which engages with the driving member to convert the rotation of the rotating body driven by the second driving shaft into a reciprocation of the driving member. The driving member is connected to the blade. Thus, the technical solution of the present disclosure uses the planetary gear transmission mechanism to drive the reciprocating motion structure and thus drives the blade to move; in other words, the technical solution of the present disclosure uses the planetary gear transmission mechanism to drive the reciprocating motion structure while driving the driving member to reciprocate through the rotation. In addition, a fixed end cap is not required to be arranged on one end of the brush roller (i.e., rotating cylinder), which reduces the structural complexity and the cost of the brush roller. Furthermore, since no output gear rings are used, there is no need to provide an idle gear pair. Moreover, the radial size of the brush roller (i.e., the rotating cylinder) can be controlled and the structure is simplified, which facilitates the assembly of the rolling brush.

### BRIEF DESCRIPTION OF DRAWINGS

FIG. 1 is a three-dimensional schematic view of a cleaning device from a top view.
FIG. 2 is a three-dimensional schematic view of the cleaning device from a bottom view.
FIG. 3 is a three-dimensional disassembled view of a rotating cylinder along an axial direction.
FIG. 4 is an enlarged view of a part A in FIG. 3.
FIG. 5 is a three-dimensional schematic view of a side cover on a second side.
FIG. 6 is a three-dimensional schematic view mainly showing a driving connection state.
FIG. 7 is a half-sectional view of a hair cutting rolling brush along an axial direction.
FIG. 8 is a three-dimensional schematic view showing a reciprocating motion structure.

### DESCRIPTION OF REFERENCE NUMERALS

1, blade; 2, rotating cylinder; 3, blade head; 4, fixing portion; 5, sun gear; 6, gear ring; 7, planet carrier; 8, rotating body; 9, track; 10, driving member; 11, first driving shaft; 12, second driving shaft; 13, elastic member; 14, gasket; 15, ball; 16, first bearing; 17, second bearing; 18, rotating engaging sleeve; 19, sealing ring; 20, compartment; 21, lock catch; 22, first driving wheel; 23, driving belt; 24, second driving wheel; 25, first side; 26, second side; 27, rotating connection shaft; 28, third bearing; 29, fourth bearing; 30, rotating connection part; 31, left end cap; 32, right end cap; 33, axial connection member; 34, side cover; 35, first coupling part; 36, second coupling part; 37, insertion fixing hole; 38, socket; 39, handle; and 40, electric motor assembly.

### DESCRIPTION OF EMBODIMENTS

The following description is a disclosure of the invention intended to enable those skilled in the art to implement the invention. The preferred embodiments in the following description are merely for example. Those skilled in the art can conceive other obvious alternatives accordingly. The basic principles of the invention described in the following description can be applied to other embodiments, modifications, improvements, alternatives, and others without departing from the spirit and scope of the invention.

The present disclosure is further described in detail as follows:

It should be noted that "hair-cutting" is an abbreviation, and it does not only refer to cutting hair. Of course, cutting hair is the main thing, but objects that can be cut are also included in the "hair-cutting" mentioned.

The present disclosure provides a cleaning device having a suction port, and the suction port is provided with a hair cutting rolling brush.

The cleaning device can be a suction head of a vacuum cleaner, a sweeper, and a floor scrubber. The cleaning device in the present disclosure generally refers to a household or a small cleaning device, which also is a feature of the hair cutting rolling brush of the present disclosure. An overall structural size of the cleaning device is well controlled and can be applied to small cleaning devices.

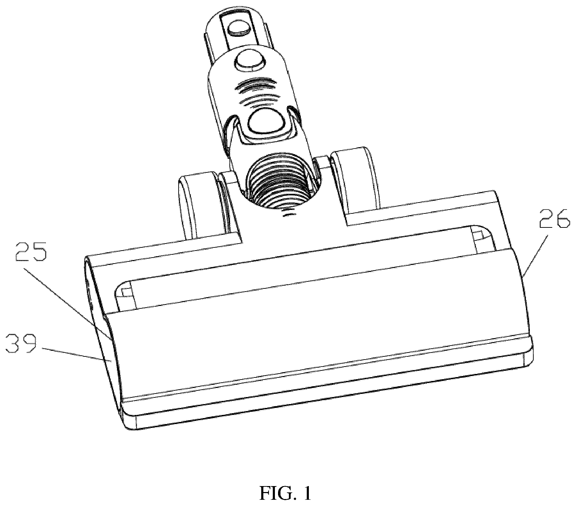

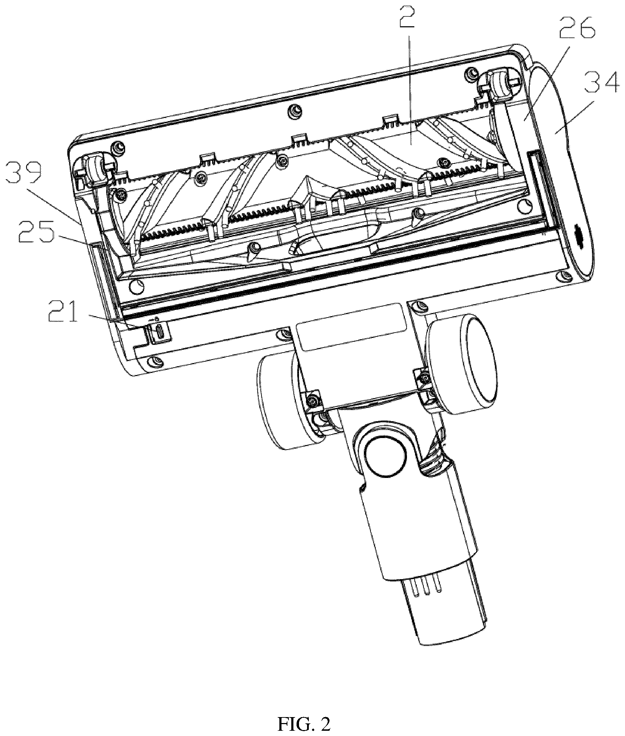

As shown in FIGS. 1 and 2, the cleaning device, namely, the suction head of a vacuum cleaner, includes a rolling brush frame. The rolling brush frame has a first side 25 and a second side 26. In order to allow the hair cutting rolling brush of the present disclosure to work, the second side 26 includes a first driving wheel 22, a driving belt 23, and a second driving wheel 24. The first driving wheel 22 is driven by an electric motor assembly 40, and the first driving wheel 22 drives the second driving wheel 24 to rotate through the driving belt 23. The second driving wheel 24 is connected to a first driving shaft 11, and a second bearing 17 is arranged between the first driving shaft 11 and the second side 26 to support the rotation of the first driving shaft 11. The first driving shaft 11 is sleeved with a fixing portion 4, and a right end of the fixing portion 4 is fixedly inserted into an insertion fixing hole 37 defined in a side cover 34 of the second side 26. A left end of the fixing portion 4 extends inward to allow for installation of a gear transmission structure.

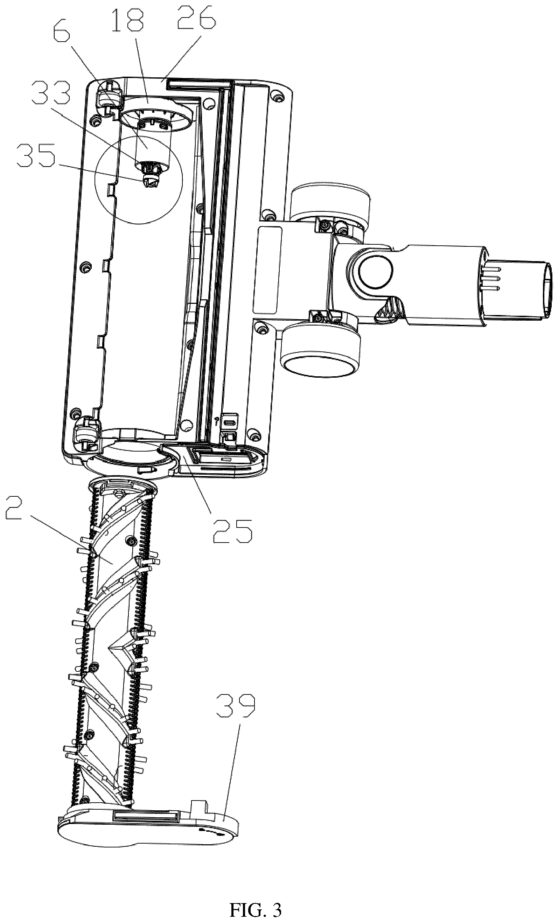

When the rolling brush of the present disclosure is assembled, a rotating cylinder 2 is axially aligned with the gear transmission structure and is in axial sleeving connection with the gear transmission structure. The other end of the rotating cylinder 2 is mounted on the second side 26 through the axial sleeving connection between the rotating cylinder 2 and the gear transmission structure. At the same time, one end of the rotating cylinder 2 moves to be mounted to the first side 25 along an axial direction with the axial sleeving connection. When the rotating cylinder 2 is disassembled, the gear transmission structure remains on the second side 26, and the rotating cylinder 2 is axially disassembled in a direction opposite to that of the axial sleeving connection, as shown in FIG. 3. In order to ensure reliable connection and facilitate disassembly and assembly, a handle 39 is arranged on one end of the rotating cylinder 2, and a locking structure is arranged between the handle 39 and the rolling brush frame. The locking structure can be in various forms. In this embodiment, as shown in FIG. 2, a lock catch 21 is used. When the rotating cylinder 2 is disassembled, firstly the lock catch 21 is unlocked to separate the lock catch 21 from a socket 38 formed on the handle 39, and then the rotating cylinder 2 is axially disassembled. A part of the driving structure, that is, the gear transmission structure remains on the second side. Conversely, the rotating cylinder 2 can be axially sleeved on the gear transmission structure, while the rotating cylinder 2 is mounted between the first side 25 and the second side 26. Then, the lock catch 21 is activated to insert a tongue thereof into the socket 38, thereby completing the locking of the rotating cylinder 2.

The disassembly and assembly of the above structure is simple and reliable, and the disassembly and assembly are convenient without using tools.

The present disclosure provides a hair cutting rolling brush having a reusable driving structure. A part or all of the driving structure is arranged on the second side 26, and a sleeve hole is defined in the other end of the rotating cylinder 2 being in axial sleeving connection with the part of the driving structure arranged on the second side 26. The axial sleeving connection allows the other end of the rotating cylinder 2 to be mounted axially on the second side 26. At the same time, one end of the rotating cylinder 2 moves axially to be mounted on the first side 25 along with the axial sleeving connection. When the rotating cylinder 2 is disassembled, the part of the driving structure arranged on the second side 26 remains on the second side 26, and the rotating cylinder 2 is disassembled in the direction opposite to that of the axial sleeving connection. Therefore, when the hair cutting rolling brush is replaced, only the rotating cylinder 2 and the structure mounted thereon need to be replaced, and the driving structure can be reused, which reduces the usage cost of the rolling brush.

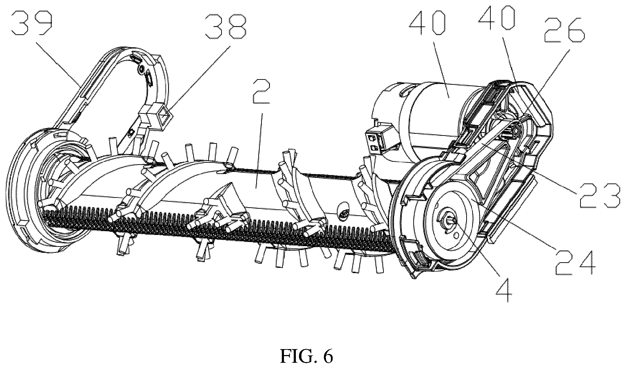

As shown in FIGS. 2, 3, 6, and 7, the hair cutting rolling brush includes a blade 1 and the rotating cylinder 2. The blade 1 includes a blade head 3, and the blade 1 is arranged inside the rotating cylinder 2. When the rotating cylinder 2 rotates, the driving structure drives the blade 1 to reciprocate and cut hair. A part or all of the driving structure is arranged on the second side 26, and a sleeve hole is defined in the other end of the rotating cylinder 2 being in axial sleeving connection the part of the driving structure arranged on the second side 26. The axial sleeving connection allows the other end of the rotating cylinder 2 to be axially mounted on the second side 26. At the same time, one end of the rotating cylinder 2 moves axially to be mounted on the first side along the axial direction with the axial sleeving connection. When the rotating cylinder 2 is disassembled, the part of the driving structure arranged on the second side 26 remains on the second side 26, and the rotating cylinder 2 is disassembled in the direction opposite to that of the axial sleeving connection.

In the embodiment, the driving structure includes a planetary gear transmission mechanism and a reciprocating motion structure. The part of the driving structure arranged on the second side 26 forms the planetary gear transmission mechanism, while the reciprocating motion structure is located inside the rotating cylinder 2. The reciprocating motion structure is installable and detachable along with the rotating cylinder 2, and the planetary gear transmission mechanism is detachably connected to the reciprocating motion structure. The planetary gear transmission mechanism is used to drive the reciprocating motion structure to reciprocate, and the reciprocating motion structure reciprocates to drive the blade 1 to reciprocate. Thus, the structure is simplified, achieving the purpose of the present disclosure, and reducing the complexity and difficulty of setting up the driving structure. In addition, in the aforementioned configuration, a change in a reciprocating speed is mainly caused by the gear transmission mechanism, which simplifies the structure. Furthermore, since the planetary gear transmission mechanism, rather than a cam, rotates and drives the reciprocating motion structure, the reciprocating speed can be controlled more precisely, which facilitates obtaining a better hair-cutting effect.

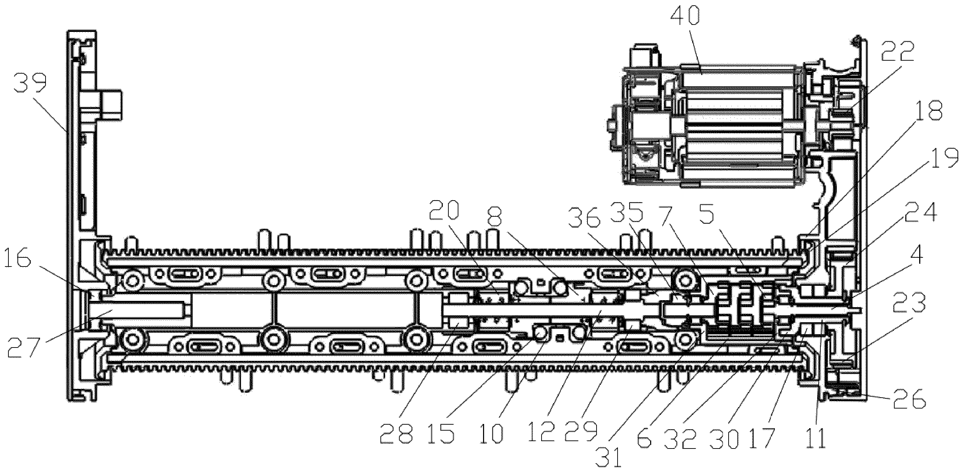

It should be noted that the first side 25 and the second side 26 are relatively defined. When one side of the rolling brush frame is defined as the first side 25, the other side opposite to the first side 25 is the second side 26. The statement in the claims that the fixing portion 4 is arranged on the second side 26 means that the side where the fixing portion 4 is located is defined as the second side 26. The scope of the claims is not limited to the embodiment restrictively. When the fixing portion 4 shown in FIG. 7 is arranged on the first side 25, at this time, the first side 25 becomes the second side 26 described in the claims. As shown in FIG. 7, in order to simplify the structure, the fixing portion 4 can be arranged in the handle 39, thus, when the handle 39 is connected to the first side 25, the fixing portion 4 is indirectly fixed by the first side 25, which is equivalent to that the fixing portion 4 is arranged on the first side 25. At this time, a gear ring 6 of the planetary gear transmission mechanism is located on the first side 25. When the electric motor assembly 40 drives the rotating cylinder 2 to rotate on the second side 26, due to the connection between the gear ring 6 of the planetary gear transmission mechanism and the rotating cylinder 2, the gear ring 6 is driven to rotate, and then the planetary gear transmission mechanism drives the reciprocating motion structure to move, which is summarized as follows: "when an input end is connected to the rotating cylinder 2, the input end is used to drive the rotating cylinder 2 to rotate, the rotating cylinder 2 rotates to drive the gear transmission structure to rotate, which in turn drives the reciprocating motion structure to reciprocate".

In some embodiments, an input end is arranged on the second side 26, and the input end is connected to the rotating cylinder 2 and/or the gear transmission structure. When the input end is connected to the rotating cylinder 2, the input end is used to drive the rotating cylinder 2 to rotate, the rotating cylinder 2 rotates to drive the gear transmission structure to rotate, which in turn drives the reciprocating motion structure to reciprocate. When the input end is connected to the gear transmission structure, the input end is used to drive the gear transmission structure to rotate, which then drives the rotating cylinder 2 to rotate and the reciprocating motion structure to reciprocate. When the input end is connected to both the rotating cylinder 2 and the gear transmission structure, the input end is used to drive both the rotating cylinder 2 and the gear transmission structure to rotate together, and the gear transmission structure rotates to drive the reciprocating motion structure to reciprocate. Such a design is beneficial for providing a compact structure.

In this embodiment, the input end is connected to the gear transmission structure and is used to drive the gear transmission structure to rotate, which then drives the rotating cylinder 2 to rotate and the reciprocating motion structure to reciprocate. Such a design is beneficial for providing a compact structure and thus controls the structural size of the rolling brush.

The input end includes a first driving shaft 11 sleeved on the fixing portion 4. The first driving shaft 11 is rotatable around the fixing portion 4, and the fixing portion 4 is mounted to the gear transmission structure. Such a design is beneficial for providing a more compact structure and thus effectively controls the overall size of the entire structure of the rolling brush.

The first driving shaft 11 includes a rotating connection part 30, which is connected to the gear transmission structure. The rotating connection part 30 is used to drive the gear transmission structure to rotate, which in turn drives the rotating cylinder 2 to rotate. Such a design is beneficial for providing a more compact structure and thus effectively controls the overall size of the entire structure of the rolling brush.

In this embodiment, the gear transmission structure adopts the planetary gear transmission mechanism, and the second side 26 is provided with the fixing portion 4. A sun gear 5 of the planetary gear transmission mechanism is fixedly connected to the fixing portion 4, and a gear ring 6 of the planetary gear transmission mechanism is connected to the rotating cylinder 2. A planet carrier 7 of the planetary gear transmission mechanism acts as a transmission output and drives the reciprocating motion structure to move. Such a design is beneficial for providing a more compact structure and thus effectively controls the overall size of the entire structure of the rolling brush.

Additionally, the gear ring 6 includes a right end cap connected to the rotating connection part 30. The rotating connection part 30 drives the gear ring 6 to rotate through the right end cap, and the gear ring 6 then drives the rotating cylinder 2 to rotate. Such a design is beneficial for providing a more compact structure and thus more effectively controls the overall size of the entire structure of the rolling brush.

As shown in FIG. 7, after the hair cutting rolling brush is installed between the first side 25 and the second side 26, the fixing portion 4, the gear transmission structure, and the reciprocating motion structure are sequentially arranged along the axial direction of the rotating cylinder 2 from right to left, which can control a lateral structural size of the rolling brush.

In this embodiment, the fixing portion 4 is shaped as a shaft, and the gear transmission structure includes three planetary carriers 7 arranged in parallel with each other, three sun gears 5 and three sets of planetary gears. As shown in FIG. 7, the fixing portion 4 is connected to the sun gear 5 at a right end of the gear transmission structure, and is output through the planetary carrier 7 at a left end of the gear transmission structure.

In this embodiment, the planet carrier 7 at the left end of the gear transmission structure is connected to an output shaft. A first coupling part 35 is connected to the output shaft and a second coupling part 36 part is connected to a second driving shaft 12 of the reciprocating motion structure. The first coupling part 35 is axially detachably connected to the second coupling part 36 and is in circumferential transmission connection with the second coupling part 36, which allows the gear transmission structure to be axially detachably connected to the reciprocating motion structure and in circumferential transmission connection with the reciprocating motion structure. The structure is simple and reliable and is easy to connect. The structure of the coupling is not limited to the embodiment, any applicable coupling structure can be applied to the technical solution of the present disclosure.

In this embodiment, the gear ring 6 is axially detachably sleeved in the rotating cylinder 2 and is in circumferential transmission connection with the rotating cylinder 2. A left end cap 31 is arranged on a left end of the gear ring 6, and a right end cap 32 is arranged on a right end of the gear ring 6. The left end cap 31, the gear ring 6, and the right end cap 32 enclose a cavity, in which the planetary gear, the planet carrier 7, and the sun gear 5 are arranged. Such a structure can protect the planetary gear, the planet carrier 7, and the sun gear 5, facilitate a compact structure of the rolling brush, and form the modular structure described below.

In this embodiment, the left end cap 31 and the right end cap 32 respectively include a bearing, the bearing of the right end cap 32 is connected to the fixing portion 4, and the bearing of the left end cap 31 is connected to the output shaft. An insertion part of the fixing portion 4 is connected to the sun gear 5, such that the rotating cylinder 2 is rotatable relative to the fixing portion 4, that is, the other end of the rotating cylinder 2 is rotatable relative to the second side 26, while the sun gear 5 remains fixed. The structure is compact and the overall size of the structure of the rolling brush can be controlled.

In this embodiment, the structure of one end of the rotating cylinder 2 which rotates relative to the first side 25 includes a first bearing 16 arranged on the end of the rotating cylinder 2 and a rotating connection shaft 27. The first bearing 16 is arranged on the handle 39, and the rotating connection shaft 27 is connected to the first bearing 16. The first bearing 16 rotatably supports the rotating connection shaft 27, and the rotating connection shaft 27 is also connected to the rotating cylinder 2. In this way, the end of the rotating cylinder 2 may achieve the structure which rotates relative to the first side 25 by being rotatably connected to the first bearing 16 through the rotating connection shaft 27.

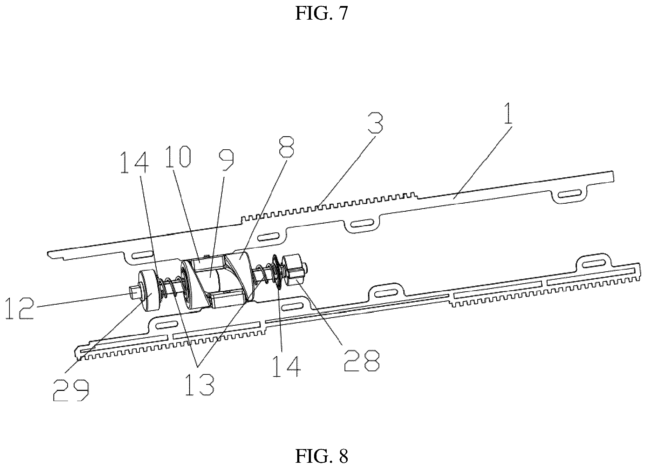

As shown in FIG. 7 and FIG. 8, the reciprocating motion structure includes a rotating body 8. A track 9 is formed on a circumference of the rotating body 8. The track 9 engages with a driving member 10 which is connected to the blade 1. Such a design ensures a simple structure and reliable reciprocation.

The track 9 adopts a guide groove that spirals along the axial direction on the circumferential surface of the rotating body 8. Both ends of the driving member 10 respectively include at least one ball 15, and the driving member 10 and the guide groove are in rolling engagement through the ball 15. Such a design can control the lateral size and also reduce the friction of motion to facilitate the reciprocating motion. Other anti-friction structures can also be used, which will not be discussed here.

In addition, the rotating body 8 is connected to a second driving shaft 12. The rotating body 8 is axially reciprocally sleeved on the second driving shaft 12 and is in circumferential transmission connection with the second driving shaft 12. The two ends of the rotating body 8 respectively include an elastic member 13 to elastically support the rotating body 8, which is an important anti-sticking design for the blade 1. According to the above design, when the blade 1 cannot move due to unexpected circumstances, the rotating body 8 can move axially along the second driving shaft 12, while the rotating cylinder 2 can still rotate. In this way, on the one hand, such a design can protect the blade 1, the rotating body 8, the gear transmission structure, the rotating cylinder 2 and other related structures, and on the other hand, such a design can adjust the cutting force of the blade 1 by selecting different elastic members 13 or elastic members with variable elasticity. Furthermore, such a design provides a technical solution that can easily adjust the cutting force, which is of great significance.

In this embodiment, a structure for achieving both axial reciprocal sleeving connection and circumferential transmission connection is used to facilitate the production and assembly of the rolling brush, for example, an axial groove is formed in the rotating body 8 and an axial protrusion is arranged on a circumference of the right part, and the axial protrusion can be sleeved in the axial groove and engage with the axial groove.

In order to facilitate the installation of the elastic member 13, the elastic member 13 adopts a compression spring. Two gaskets 14 are respectively arranged on two ends of the right part, which include a left gasket and a right gasket. A compression spring is arranged between the left gasket and a left side of the rotating body 8, and another compression spring is arranged between the right gasket and a right side of the rotating body 8. With this configuration, the connection is reliable. In addition, the elastic member 13 can be used in another way, that is, a compression degree of the compression spring can be changed by adjusting a position of the gasket 14, thereby changing a cutting power of the blade 1. Furthermore, the elastic member 13 can also improve the universality of parts and components of the rolling brush, without preparing too many types of compression springs.

The position of the gasket 14 can be adjusted by, for example, increasing a thickness of the gasket 14, which changes the position where the compression spring is pushed by the gasket 14. In some embodiments, the gasket 14 can be moved and then fixed, which also changes the position where the compression spring is pushed by the gasket 14.

The output shaft is inserted into the cavity through the left end cap 31, and is connected to the planet carrier 7.

Through the above configuration, a relatively-independent assembly can be obtained, which includes the output shaft, the left end cap 31, the planetary gear transmission mechanism, the right end cap 32, and the fixing portion 4. That is, the aforementioned components can be assembled into an assembly which is then connected to other structures of the rolling brush, which greatly facilitates the production and assembly of the rolling brush. In addition, the production quality is high, allowing the hair cutting rolling brush to have a stable production quality.

In this embodiment, the reciprocating motion structure is arranged in the independent compartment 20. Such a design protects the reciprocating motion structure. In addition, a third bearing 28 and a fourth bearing 29 can be respectively located in a left partition and a right partition of the compartment 20. The third bearing 28 and the fourth bearing 29 can rotate and support the second driving shaft 12. Therefore, the structure is compact, and the left and right partitions also provide a certain degree of strength for the compartment 20, allowing the structure of the rotating cylinder 2 to be more stable.

In order to achieve better anti-hair curling performance, a sealing ring 19 is arranged between the second side 26 and the rotating cylinder 2. In this embodiment, the second side 26 includes a rotating engaging sleeve 18, and the sealing ring 19 is arranged between a circumferential wall of the other end (i.e., the right end) of the rotating cylinder 2 and the rotating engaging sleeve 18. The sealing ring 19 rotates with the rotating cylinder 2. The sealing ring 19 can be, for example, an oil seal.

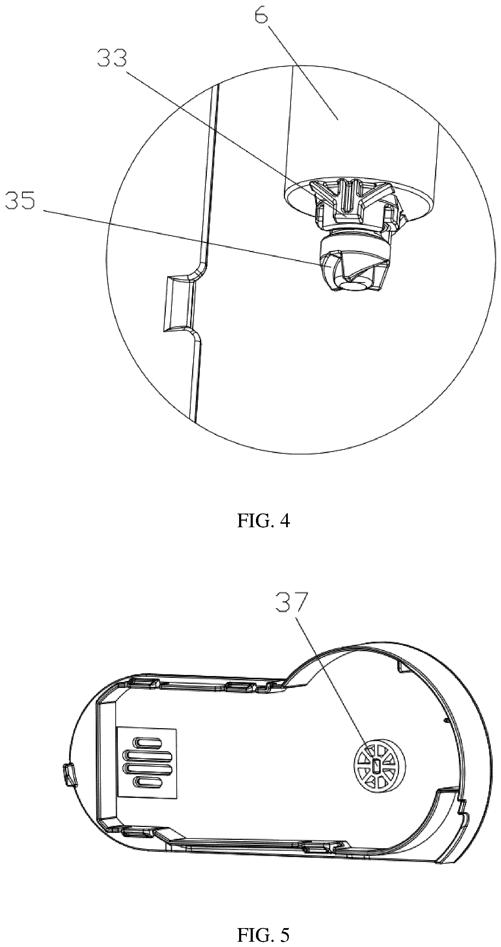

In order to facilitate the axial detachable connection and the subsequent circumferential transmission connection between the gear transmission structure and the rotating cylinder 2, while effectively controlling the lateral size, as shown in FIGS. 3 and 4, the end of the gear transmission structure adjacent to the reciprocating motion structure includes an axial connection member 33. The gear ring 6 is axially detachably connected to the rotating cylinder 2 through the axial connection member 33. In this way, the axial connection member 33 simultaneously serves as a circumferential transmission connection member for the rotating cylinder 2 to drive the gear ring 6 to rotate together. The number of the axial connection member 33 is two, and the two axial connection members 33 are evenly distributed circumferentially along the end of the gear transmission structure adjacent to the reciprocating motion structure.

When understanding the present disclosure, if necessary, the above structure can be understood together with other embodiments/drawings, and will not be elaborated here.

The above descriptions are only an exemplary embodiment of the present disclosure. Therefore, any equivalent changes or modifications made based on the structure, features, and principles described in the scope of protection of the present disclosure are included in the scope of protection of the present disclosure.

The above descriptions are only an exemplary embodiment of the present disclosure. Therefore, any equivalent changes or modifications made based on the structure, features, and principles described in the scope of protection of the present disclosure are included in the scope of protection of the present disclosure.

## Claims

1. A blade driving structure, comprising a rolling brush frame having a first side and a second side, wherein the blade driving structure further comprises a planetary gear transmission mechanism, a fixing portion is arranged on the second side, a sun gear of the planetary gear transmission mechanism is fixedly connected to the fixing portion, a gear ring of the planetary gear transmission mechanism is connected to a rotating cylinder, and a planet carrier of the planetary gear transmission mechanism acts as a transmission output and drives a reciprocating motion structure to move;
the planet carrier comprises an output shaft having a first coupling part configured to be in circumferential transmission connection with a second coupling part connected to a second driving shaft of the reciprocating motion structure;
the reciprocating motion structure comprises a rotating body, a second driving shaft in circumferential transmission connection with the rotating body, a track is formed on a circumference of the rotating body, the track engages with a driving member to convert a rotation of the rotating body driven by the second driving shaft into a reciprocation of the driving member, and the driving member is connected to the blade.

2. The blade driving structure according to claim 1, wherein the fixing portion is shaped as a shaft, and the planetary gear transmission mechanism comprises a plurality of the planet carriers arranged in parallel with each other, a plurality of the sun gears, and a plurality sets of the planet gears, and a number of the sun gears and a number of the planet gears respectively correspond to that of the planet carriers; the fixing portion is connected to the sun gear at a right end of the planetary gear transmission mechanism, and is output through the planet carrier at a left end of the gear transmission mechanism.

3. The blade driving structure according to claim 1 or 2, wherein after a hair cutting rolling brush is installed between the first side and the second side, the fixing portion, the gear transmission structure, and the reciprocating motion structure are sequentially arranged along an axial direction of the rotating cylinder of the hair cutting rolling brush from right to left.

4. The blade driving structure according to claim 1, wherein after the gear ring is axially sleeved with the rotating cylinder, the gear ring is in circumferential transmission connection with the rotating cylinder, a left end cap is arranged on a left end of the gear ring, and a right end cap is arranged on a right end of the gear ring; the left end cap, the gear ring, and the right end cap enclose a cavity, and the planetary gear, the planet carrier, and the sun gear are arranged in the cavity.

5. The blade driving structure according to claim 4, wherein the left end cap and the right end cap respectively comprise a bearing, the bearing of the right end cap is connected to the fixing portion, and the bearing of the left end cap is connected to the output shaft; an insertion part of the fixing portion is connected to the sun gear, such that the rotating cylinder is rotatable relative to the fixing portion, the other end of the rotating cylinder is rotatable relative to the second side, and meanwhile the sun gear connected to the fixing portion is fixed.

6. The blade driving structure according to claim 4, wherein the output shaft is inserted into a cavity through the left end cap, and the output shaft is connected to the planet carrier; a relatively-independent assembly is arranged, which comprises the output shaft, the left end cap, the planetary gear transmission mechanism, the right end cap, and the fixing portion, and the assembly is connected to other structures of the hair cutting rolling brush.

7. The driving structure according to claim 1, wherein the track is formed on a circumferential surface of the rotating body and spirals along an axial direction of the rotating body.

8. The blade driving structure according to claim 7, wherein two ends of the driving member respectively comprise at least one ball, and the driving member engages with the track through the at least one ball.

9. The blade driving structure according to claim 1, wherein the second driving shaft is axially reciprocally sleeved in the rotating body and is in circumferential transmission connection with the rotating body, and two elastic members are respectively arranged on two ends of the rotating body to elastically support the rotating body.

10. The blade driving structure according to claim 9, wherein the elastic member is a compression spring, a left gasket and a right gasket are respectively arranged on two ends of a right part, a compression spring is arranged between the left gasket and a left side of the rotating body, and another compression spring is arranged between the right gasket and a right side of the rotating body.

11. The blade driving structure according to claim 10, wherein a compression degree of the compression spring is changed by adjusting a position of the corresponding compression spring, thereby changing a cutting power of the blade.

12. The blade driving structure according to claim 1, wherein the reciprocating motion structure is arranged in an independent compartment, a third bearing and fourth bearing are respectively arranged on a left partition and a right partition of the compartment, and the third bearing and the fourth bearing rotatably support the second driving shaft.

13. A hair cutting rolling brush, comprising the blade driving structure of any one of claims 1 to 12.

14. The hair cutting rolling brush according to claim 13, wherein a part or all of the blade driving structure is arranged on the second side, and a sleeve hole is defined in the other end of the rotating cylinder being in axial sleeving connection with the part of the blade driving structure on the second side; the axial sleeving connection is used to allow the other end of the rotating cylinder to be installed on the second side in an axial direction; one end of the rotating cylinder moves axially to be mounted on the first side with the axial sleeving connection; when the rotating cylinder is disassembled, the part of the blade driving structure arranged on the second side remains on the second side, and the rotating cylinder is disassembled in an direction opposite to that of the axial sleeving connection; the blade driving structure comprises the planetary gear transmission mechanism and the reciprocating motion structure; the part of the blade driving structure arranged on the second side forms the planetary gear transmission mechanism, while the reciprocating motion structure is located inside the rotating cylinder; the reciprocating motion structure is installable and detachable along with the rotating cylinder, and the planetary gear transmission mechanism is detachably connected to the reciprocating motion structure.

15. A cleaning device equipped with a suction port, wherein the suction port is provided with a hair cutting rolling brush according to claim 13 or 14.
